# EUROPEAN PATENT APPLICATION

(11) **EP 2 042 785 A2**
(43) Date of publication of application: **01.04.2009**
(21) Application number: 08253142.7
(22) Date of filing: 26.09.2008
(51) Int. Cl.: F16H 63/42

(54) **Auxiliary transmisssion shift position determining apparatus and vehicular gear shift indicator**

(30) Priority: 26.09.2007 JP 2007248782
(71) Applicant: Toyota Jidosha Kabushiki Kaisha, Toyota-shi, Aichi-ken 471-8571 (JP)
(72) Inventor: Kinoshita, Tomonori, Toyota-shi, Aichi-ken 471-8571 (JP); Ohkubo, Tadanao, Toyota-shi, Aichi-ken 471-8571 (JP)
(74) Representative: Albutt, Anthony John

(57) **Abstract**

A four-wheel-drive vehicle having an auxiliary transmission is provided with a low range gear estimating map used when the auxiliary transmission is in a low range, and a high range gear estimating map used when the auxiliary transmission is in a high range. When an NV ratio (i.e., a ratio of the engine speed to the vehicle speed) while the vehicle is taking off is within a range of NV ratios unique to the low range that are established only with the low range gear estimating map, it is determined that the auxiliary transmission is in the low range, and when that NV ratio is outside of this range of NV ratios unique to the low range, it is determined that the auxiliary transmission is in the high range. The current gear of the main transmission is determined based on this and the result is used in shift instructing control. Accordingly, the range position of the auxiliary transmission can be accurately identified without requiring a switch or the like for determining the range of the auxiliary transmission.

## Description

### BACKGROUND OF THE INVENTION

### 1. Field of the Invention

The invention relates to an apparatus for determining a shift position (Hi or Lo in a two-speed auxiliary transmission) of an auxiliary transmission provided in a transfer or the like of a four-wheel-drive vehicle, for example. The invention also relates to a gear shift indicator which i) indicates to the driver the gear (i.e., the gear of a manual transmission) of a main transmission that is appropriate for the running state of the vehicle, and ii) and changes the indication according to determination results by the shift position determining apparatus.

### 2. Description of the Related Art

In order to obtain the required running torque and vehicle speed, vehicles conventionally use a transmission to change the rotation that is input from an engine (e.g., an internal combustion engine) and outputs the changed rotation to the wheels. However, the optimum gear for the running state is mostly determined by the vehicle speed and the engine load (e.g., the throttle opening amount) and the like. In a vehicle having an automatic transmission, for example, a shift map with shift lines (i.e., gear shifting lines) for obtaining the optimum gear according to the vehicle speed and the throttle opening amount is stored in a controller, and gear shifting operations are automatically performed according to this shift map.

However, because the driver sets the gear as he or she sees fit in a vehicle with a manual transmission, the gear selection and the timing of the shift operation differs greatly depending on the individual so it is very possible that the vehicle may be driven in a gear other than the optimum gear. For example, with a shift into a higher gear (i.e., an upshift), shifting into a gear lower than the optimum gear (i.e., to the low gear side) reduces fuel efficiency, while shifting into a gear higher than the optimum gear (i.e., to the high gear side) inhibits sufficient acceleration performance from being obtained.

To solve these kinds of problems, Japanese Patent Application Publication No. 11-311332 (JP-A-11-311332) and Japanese Patent Application Publication No. 2003-19912 (JP-A-2003-19912) propose a gear shift indicator that instructs a driver to shift into the optimum gear obtained according to the running state of the vehicle, such as the engine load and vehicle speed or the like, when a gear other than the optimum gear is selected.

More specifically, a shift map that is generally similar to the shift map in the automatic transmission described above is stored in a controller, and if the current gear set by the driver is different than the optimum gear obtained from the running state, the gear shift indicator visually instructs the driver to upshift or downshift according to the shift map. For example, a display portion for prompting an upshift or downshift of the gear of the transmission is provided in a combination meter in the vehicle cabin, and the gear shift indicator advises the driver to shift (i.e., change gears) by illuminating this display portion according to the running state.

With this kind of gear shift indicator, it is necessary to determine the current gear set by the driver. One method for making this determination is described in Japanese Patent Application Publication No. 4-171352 (JP-A-4-171352). This method detects the engine speed (N) and the vehicle speed (V), and determines the gear according to the ratio of the engine speed N to the vehicle speed V, i.e., according to the NV ratio.

The gear shift indicator described above is not limited to a manual transmission. That is, it may also be applied to a vehicle provided with an automatic transmission having a manual shift function (i.e., a so-called sequential-shift transmission).

While it is desirable that the gear shift indicator described above be applied to various types of vehicles, the following issues arise when it is to be applied to a four-wheel-drive vehicle provided with an auxiliary transmission.

The auxiliary transmission described above is provided downstream of a main transmission (such as a 5-speed manual transmission) and further changes the rotation initially changed and output by the main transmission. The auxiliary transmission is typically able to shift into one of two ranges, i.e., a high range (Hi) and a low range (Lo).

For example, when running on a paved road, the high range is normally selected to enable high speed running. On the other hand, when climbing a hill off-road, for example, the low range is normally selected to enable greater driving force to be obtained, thereby improving running performance on rough roads.

Also, this auxiliary transmission can be switched between the high range and the low range by the driver operating a range changing lever or a range changing switch or the like located near the driver's seat inside the vehicle cabin.

At the same engine speed and the same vehicle speed, the gear in the main transmission when the auxiliary transmission is set to the high range is different than it is when the auxiliary transmission is set to the low range. Therefore, even if the gear shift indicator is applied to a vehicle provided with the auxiliary transmission, it is difficult to accurately determine the current gear of the main transmission by the NV ratio obtained from the engine speed and the vehicle speed.

More specifically, a condition in which the engine speed is 2500 rpm and the vehicle speed is 30 km/h, for example, is satisfied both i) when the auxiliary transmission is in the high range and the main transmission is in 2nd gear, and ii) when the auxiliary transmission is in the low range and the main transmission is in 4th gear. Therefore, it is difficult to accurately determine the current gear of the main transmission only by identifying the NV ratio. Accordingly, information related to the current gear of the main transmission, which is information that is necessary for the gear shift indicator to advise a shift (i.e., a gear change), is not reliable so appropriate advice may not be able to be given.

To solve this kind of problem, it is possible to employ a structure in which a range determining switch is provided in the auxiliary transmission, and the current gear of the main transmission is identified from the relationship between the engine speed and the vehicle speed after identifying the range position of the auxiliary transmission by detecting the operating position of a range changing lever or the position of a fork (i.e., a range changing fork) provided in the auxiliary transmission according to a signal from the switch.

However, with this structure, a switch for determining the range of the auxiliary transmission, as well as a signal wire for transmitting the detection signal from the switch to an ECU must be newly provided, which increases manufacturing costs and complicates the structure, and is therefore not preferable. Also, providing this switch also requires that logic be developed for a fail-safe in case the switch fails, which complicates the design.

### SUMMARY OF THE INVENTION

In view of these issues, this invention thus provides an auxiliary transmission shift position determining apparatus and a vehicular gear shift indicator which, in a vehicle provided with an auxiliary transmission, can correctly identify the range position (i.e., shift position) (hereinafter also simply referred to as "range") of the auxiliary transmission without requiring a switch for determining the range of the auxiliary transmission.

Thus, in the invention, when there is an actual NV ratio within a range of NV ratios that exist only in a particular range position, from among a range of NV ratios that are obtainable in each range (i.e., shift position) of the auxiliary transmission, the range of the auxiliary transmission is determined as that particular range.

Thus, a first aspect of the invention presumes a shift position determining apparatus that determines a shift position of an auxiliary transmission in transmission unit provided with the auxiliary transmission and a main transmission, which is connected to an output shaft of an internal combustion engine and which can be manually shifted by a driver of a vehicle. This shift position determining apparatus is provided with auxiliary shift position determining means for determining the shift position of the auxiliary transmission based on the speed of the internal combustion engine and the running speed of the vehicle when the vehicle is taking off from a standstill or running.

Normally when a vehicle takes off from a standstill, the gear of the main transmission is set to 1 st gear or 2nd gear. In this case, if the vehicle takes off when the shift position of the auxiliary transmission is the low range (i.e., the range with the largest reduction gear ratio), the NV ratio at that time can be obtained as an NV ratio that does not exist in any other range (i.e., in a range with a small reduction gear ratio such as the high range). Therefore, it is determined that the shift position of the auxiliary transmission is the low range when the NV ratio at take-off (i.e., immediately after take-off) is within the range of NV ratios established in the low range but outside the range of NV ratios established in any other range. Also, if the shift position of the auxiliary transmission is in the high range when the vehicle is running, the NV ratio at that time can be obtained as an NV ratio that does not exist in any other range (i.e., in a range with a large reduction gear ratio such as the low range). Therefore, it is determined that the shift position of the auxiliary transmission is the high range when the NV ratio while the vehicle is running is within the range of NV ratios established in the high range but outside the range of NV ratios established in any other range. Accordingly, it is possible to correctly identify the range position (i.e., the shift position) of the auxiliary transmission without requiring a switch or the like to determine the range of the auxiliary transmission. As a result, it is possible to determine the shift position of the auxiliary transmission without increasing manufacturing costs, complicating the structure, or requiring the development of logic for a fail-safe in case the switch or the like fails.

Some specific examples of the operation for determining the shift position of the auxiliary transmission by the auxiliary shift position determining means are as follows. First, the operation presumes a shift position determining apparatus that determines a shift position of an auxiliary transmission in transmission unit provided with the auxiliary transmission and a main transmission, which is connected to an output shaft of an internal combustion engine and which can be manually shifted by a driver of a vehicle. This shift position determining apparatus is provided with auxiliary shift position determining means for, when an NV ratio, which is a ratio of the speed of the internal combustion engine while the vehicle is running and the running speed of the vehicle, is an NV ratio that only exists within a range of NV ratios of a particular shift position, from among a range of NV ratios set in a plurality of shift positions able to be established by the auxiliary transmission, determining that the auxiliary transmission is in that particular shift position. An example of the particular shift position in this case is the low range where the reduction gear ratio is the largest.

More specifically, two shift positions having different gear ratios can be set in the auxiliary transmission, one shift position corresponding to a high range and the other shift position corresponding to a low range. Further, auxiliary shift position determining means is provided for, when an NV ratio, which is a ratio of the speed of the internal combustion engine while the vehicle is running and the running speed of the vehicle, is an NV ratio that only exists within a range of NV ratios of the low range, from among a range of NV ratios of the high range and the range of NV ratios of the low range that can be established by the auxiliary transmission, determining that the auxiliary transmission is in the low range. In this case, the auxiliary shift position determining means may determine that the auxiliary transmission is in the high range when the NV ratio is in a range other than the range of NV ratios of the low range.

According to these characteristics, if the NV ratio when the vehicle is running becomes an NV ratio that only exists within the range of NV ratios of a particular shift position of the auxiliary transmission, the shift position of the auxiliary transmission can be determined at that point. For example, the shift position of the auxiliary transmission can be determined not only when the vehicle takes off from a standstill but also in cases such as when the main transmission is in 1st gear or 2nd gear while the vehicle is running.

Also, two shift positions having different gear ratios may be able to be set in the auxiliary transmission, one shift position corresponding to a high range and the other shift position corresponding to a low range. Further, when an NV ratio, which is a ratio of the speed of the internal combustion engine while the vehicle is running and the running speed of the vehicle, is an NV ratio that only exists within a range of NV ratios of the high range, from among the range of NV ratios of the high range and a range of NV ratios of the low range that can be established by the auxiliary transmission, it may be determined that the auxiliary transmission is in the high range.

Also, a gear shift indicator that changes a shift instruction to the driver according to the determination results of the shift position determining apparatus is also a category of technical features of the invention. That is, a gear shift indicator is presumed which is used in a vehicle having a manual transmission as a main transmission that can be manually shifted, and which instructs a driver to shift the gear of the main transmission to an optimum gear when a shift instructing condition is satisfied, the shift instructing condition being that the optimum gear of the main transmission obtained according to a driving state of the vehicle differs from the gear of the main transmission selected by the driver. This gear shift indicator is provided with shift instructing means for i) receiving a signal output from the auxiliary shift position determining means in the shift position determining apparatus of the auxiliary transmission according to any one of the means for solving the problems described above, ii) estimating the gear of the main transmission currently selected by the driver, according to the shift position of the auxiliary transmission determined by the auxiliary shift position determining means, and iii) instructing the driver to shift into the optimum gear when the current gear of the main transmission differs from the optimum gear.

Accordingly, it is possible to accurately determine the current gear of the main transmission, and thus determine whether to instruct the driver to shift based on a comparison of the gear of the main transmission and the optimum gear. As a result, a highly reliable shift instruction can be given even in the vehicle provided with an auxiliary transmission, which increases the practicality of applying a gear shift indicator to this type of vehicle.

Also, in this case, when two shift positions corresponding to a high range and a low range can be set in the auxiliary transmission, the instruction to the driver to shift may be stopped when the auxiliary transmission is in the low range. That is, shift instruction stopping means may be provided as well as shift instructing means. The shift instructing means receives a signal output from the auxiliary shift position determining means, estimates the gear of the main transmission currently selected by the driver, according to the shift position of the auxiliary transmission determined by the auxiliary shift position determining means, and instructs the driver to shift into the optimum gear when the current gear of the main transmission is different than the optimum gear. The shift instruction stopping means receives a signal output from the auxiliary shift position determining means, and stops the shift instructing means from instructing the driver to shift when it is determined that the auxiliary transmission is in the low range.

If a shift instruction which improves fuel efficiency or the like is given when the auxiliary transmission is in the low range and the driver wants more driving force to improve rough-road running performance as opposed to better fuel efficiency, that instruction does not coincide with the intentions of the driver and may thus be annoying to the driver. Therefore, the shift instructing control operation may be stopped when the auxiliary transmission is in the low range so that an unnecessary shift instruction is not made.

In the invention, when there is an actual NV ratio within the range of NV ratios that exist only in a particular range position, from among the range of NV ratios that can be established in each range position (i.e., shift position) of the auxiliary transmission, the range position of the auxiliary transmission is determined as that particular range position. Therefore, the shift position of the auxiliary transmission can be accurately identified without requiring a switch or the like for determining the range of the auxiliary transmission. As a result, it is possible to determine the shift position of the auxiliary transmission without increasing manufacturing costs, complicating the structure, or requiring the development of logic for a fail-safe in case the switch or the like fails.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is a view schematically showing the structure of a drive system of a four-wheel-drive vehicle according to example embodiments of the invention;
FIG 2 is a sectional view of a transfer with part of the transfer case broken away;
FIG 3 is a sectional view of an auxiliary transmission and the area around the auxiliary transmission;
FIG. 4 is an enlarged front view of a combination meter;
FIG. 5 is a block diagram schematically showing the structure of a control system that includes a control apparatus;
FIG 6 is a view of a high range shift map;
FIG 7 is a view of a low range shift map;
FIG 8 is a view of a high range gear estimating map;
FIG 9 is a view of a low range gear estimating map;
FIGS. 10A and 10B are views showing the illuminated states of an upshift lamp and a downshift lamp, and a display state of a display, with FIG 10A showing a case of an upshift and FIG 10B showing a case of a downshift;
FIG. 11 is a flowchart illustrating a routine for a shift instructing control operation in a first example embodiment of the invention; and
FIG. 12 is a flowchart illustrating a routine for a shift instructing control operation in a second example embodiment of the invention.

### DETAILED DESCRIPTION OF EMBODIMENTS

Example embodiments of the present invention will be described in greater detail below with reference to the accompanying drawings. In these example embodiments, a case will be described in which an auxiliary transmission shift position determining apparatus of the invention is used for operating a gear shift indicator that indicates the optimum gear to the driver. Also, in the example embodiments, a four-wheel-drive vehicle will be described which is provided with power transmission system in which a manual transmission capable of shifting into five forward gears (e.g., a 5-speed manual transmission) is used as the main transmission, and in which a transfer having an auxiliary transmission and a center differential is connected to this main transmission.

First, a first example embodiment will be described.

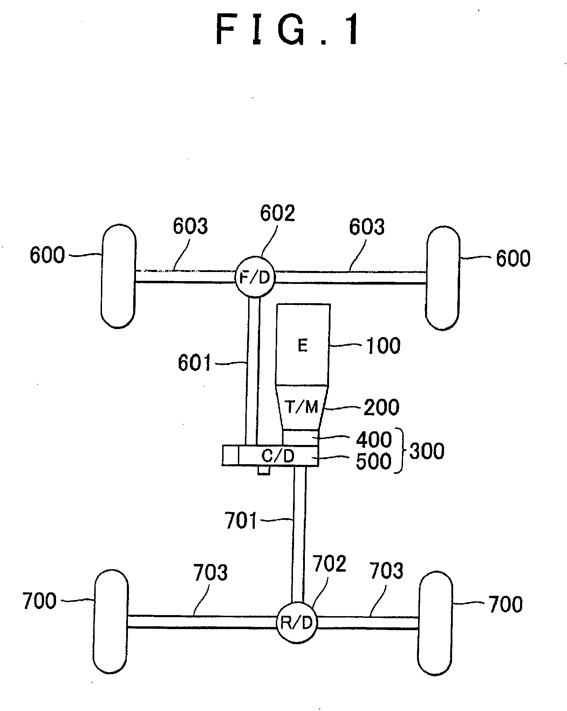

FIG 1 is a view schematically showing the structure of a drive system of a four-wheel-drive vehicle according to this example embodiment. As shown in FIG. 1, the four-wheel-drive vehicle has a main transmission (T/M) 200 and a transfer 300, which is provided downstream of this main transmission 200, as mechanisms for changing the rotation output from an engine (E/G) 100. This transfer 300 includes an auxiliary transmission 400 and a center differential (C/D) 500. Therefore, the rotation output from the engine 100 is changed by the main transmission 200, and then further changed by the auxiliary transmission 400, after which the resultant rotation is output to driving wheels 600 (front wheels) and 700 (rear wheels) via the center differential 500. Accordingly, the main transmission 200 and the auxiliary transmission 400 together make up a transmission unit of the invention.

More specifically, the main transmission 200 is a manual transmission that is capable of shifting into five forward gears. The structure of the main transmission 200 is well known so a description of it will be omitted here.

Meanwhile, the auxiliary transmission 400 has two gears or ranges, i.e., a high speed side (a high range) and a low speed side (a low range). One of these ranges (either the high range or the low range) is selected by the driver operating a range changing lever, not shown, located near the driver's seat (the structure for changing ranges will be described later). During normal running, the high range is selected. On the other hand, when running (climbing a hill or the like in particular) off-road, for example, more driving force can be obtained (i.e., more than is obtained during normal running) by switching the auxiliary transmission 400 into the low range.

The driving force obtained via the auxiliary transmission 400 is distributed via the center differential 500 to a first driveshaft 601 which is a driveshaft on the front wheel 600 side, and a second driveshaft 701 which is a driveshaft on the rear wheel 700 side. Also, the first driveshaft 601 on the front wheel 600 side is connected to left and right front driveshafts 603 via a front differential 602. Similarly, the second driveshaft 701 on the rear wheel 700 side is connected to left and right rear driveshafts 703 via a rear differential 702. The driveshafts 603 and 703 are connected, so as to transmit power, to the wheels 600 and 700, respectively. Accordingly, four-wheel-drive running is possible by distributing the driving force from the engine 100 to all of the wheels 600 and 700.

Next, the structure and operation of the auxiliary transmission 400 provided in the transfer 300 will be described.

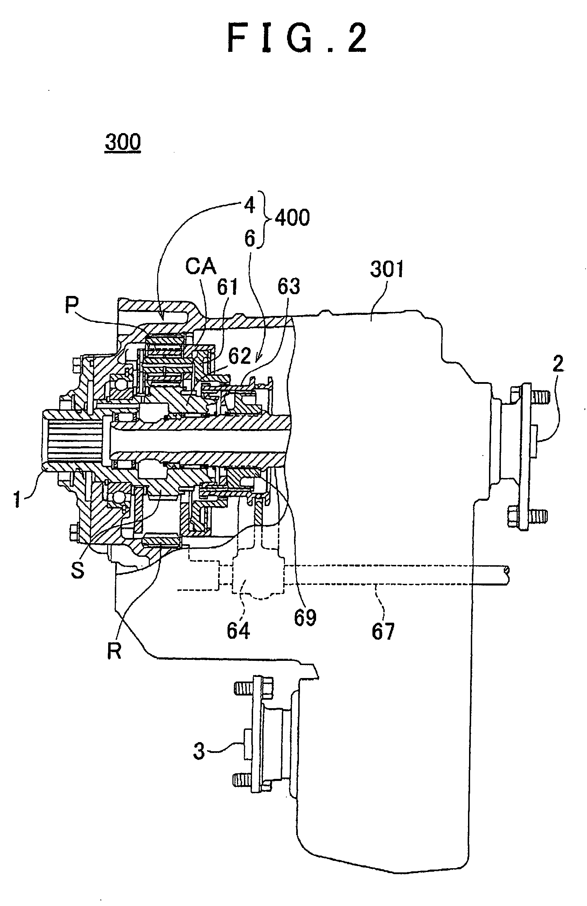

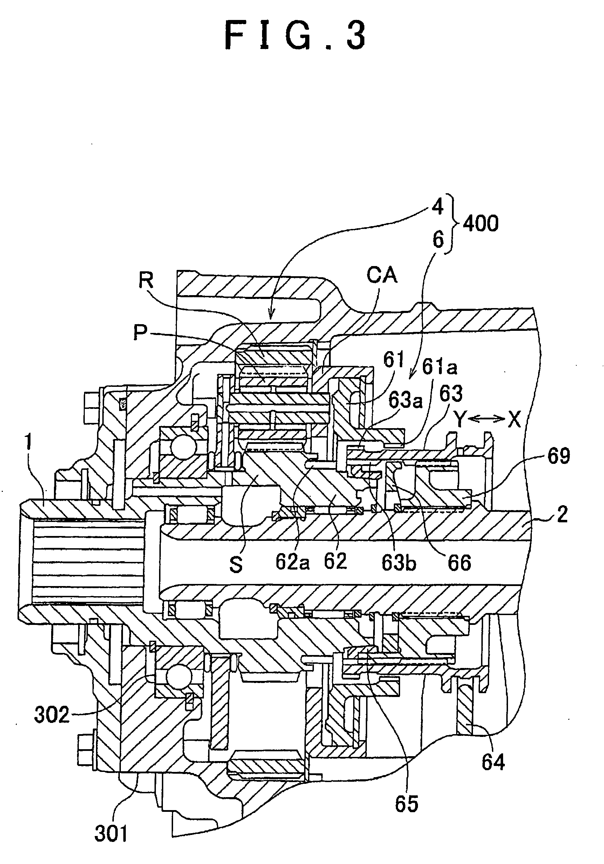

FIG. 2 is a sectional view of a transfer with part of a transfer case 301 broken away. FIG. 3 is a sectional view of the auxiliary transmission 400 and the area around the auxiliary transmission 400. The structure of the auxiliary transmission 400 is not limited to the structure described below as long as it enables a plurality of ranges (gears) to be set.

As shown in these drawings, the transfer 300 includes the auxiliary transmission 400 and the center differential 500. 1 denotes an input shaft 1, 2 denotes a first output shaft 2, and 3 denotes a second output shaft 3. A range changing mechanism 6 changes the auxiliary transmission mechanism 4 between a high range (Hi) and a low range (Lo). That is, the auxiliary transmission mechanism 4 and the range changing mechanism 6 together make up the auxiliary transmission 400.

Rotation output from the main transmission 200 which is connected to the upstream side (i.e., the upstream side in the direction in which power is transmitted) of the transfer 300 is input to the input shaft 1. The first output shaft 2 is arranged on the same axis as the input shaft 1 and outputs rotation to the rear wheel 700 side. The second output shaft 3 is arranged parallel with the first output shaft 2 and outputs rotation to the front wheel 600 side.

Also, a drive gear, not shown, is provided on the first output shaft 2 so as to rotate together with the output shaft 2. Similarly, a driven gear, also not shown, is provided on the second output shaft 3 so as to rotate together with the second output shaft 3. An endless member such as a chain or a belt is wound around the drive gear and the driven gear so that power can be transmitted between the two. As a result, the driving force from the engine 100 is distributed to the wheels 600 and 700 via the first output shaft 2 and the second output shaft 3.

The auxiliary transmission mechanism 4 is formed by a single pinion type planetary gear set. That is, the auxiliary transmission mechanism 4 is structured such that a plurality of pinion gears P are interposed at intervals in the radial direction between a ring gear R and a sun gear S that are concentrically arranged. These pinion gears P are rotatably supported by a carrier CA.

The sun gear S is connected to the input shaft 1 so that it can rotate together with the input shaft 1, and is rotatably supported by the transfer case 301 via a roller bearing 302. The ring gear R is fixed to the transfer case 341 so it can neither rotate nor move in the axial direction.

The range changing mechanism 6 is structured to select one range, from among a neutral range (N), the low range (Lo), and the high range (Hi), in response to the driver operating a range changing lever or the like, not shown, arranged near the driver's seat.

The neutral range is a range which places the auxiliary transmission 400 in a state in which rotation input to the input shaft 1 is not transmitted to the first output shaft 2.

The high range is a range which places the auxiliary transmission 400 in a state that establishes a power transmitting path by which rotation input to the input shaft 1 is transmitted to the first output shaft 2 from the sun gear S of the auxiliary transmission mechanism 4, i.e., in a state in which the input shaft 1 and the first output shaft 2 are directly connected or locked together.

The low range is a range which places the auxiliary transmission 400 in a state that establishes a power transmitting path by which rotation input to the input shaft 1 is transmitted to the first output shaft 2 from the carrier CA of the auxiliary transmission mechanism 4, i.e., in a state in which the rotation speed of the carrier CA is output to the first output shaft 2. The reduction gear ratio of this low range is set appropriately according to the gear ratio and the diameters of the portions of the auxiliary transmission mechanism 4 and the like.

This range changing mechanism 6 includes at least a low range piece 61, a high range piece 62, a coupling sleeve 63, a fork 54, a synchronizer ring 65, and a synchro key 66.

The low range piece 61 is fastened to the carrier CA of the auxiliary transmission mechanism 4 so as to be able to rotate together with the carrier CA. A plurality of internal teeth 61a are provided at equidistant intervals in the circumferential direction on the edge portion on the downstream side, in the direction of rotational input, of the inner peripheral surface of the low range piece 61.

The high range piece 62 is formed integral with the sun gear S of the auxiliary transmission mechanism 4 and protrudes from the side surface of the sun gear S. A plurality of external teeth 62a are formed at equidistant intervals in the circumferential direction on the sun gear S side of the outer peripheral surface of this high range piece 62.

The coupling sleeve 63 is provided on the outside of the first output shaft 2 via a hub 69 so as to be able to rotate together with the first output shaft 2.

A plurality of external teeth 63a that can mesh with the internal teeth 61a of the low range piece 61 are provided at equidistant intervals in the circumferential direction on the edge portion on the upstream side, in the direction of rotational input, of the outer peripheral surface of the coupling sleeve 63. Also, a plurality of internal teeth 63b that can mesh with the external teeth 62a of the high range piece 62 are provided at equidistant intervals in the circumferential direction on the edge portion on the upstream side, in the direction of rotational input, of the inner peripheral surface of the coupling sleeve 63.

The fork 64 displaces the coupling sleeve 63 in the axial direction parallel with the first output shaft 2. A selector shaft 67 is connected to the fork 64 such that when operating force of the range changing lever is transmitted to the fork 64 via this selector shaft 67, it causes the fork 64 to move in a direction along the axis of the selector shaft 67, thereby displacing the coupling sleeve 63 in the axial direction parallel with the first output shaft 2.

The synchronizer ring 65 is designed to be pressed against the tapered outer peripheral surface of the high range piece 62 by the synchro key 66, which is slidably connected in the axial direction to the coupling sleeve 63, when the coupling sleeve 63 is brought into mesh with the high range piece 62. The frictional torque that is generated between these sliding contact surfaces brings the coupling sleeve 63 into synchronized rotation with the high range piece 62.

Next, operation of the range changing mechanism 6 will be described. In order to change shift ranges smoothly, it is basically preferable to change shift ranges while the vehicle is stopped or when the main transmission 200, which is connected to the upstream side of the transfer 300, is in the neutral position. Such prescribed practice is generally written in vehicle user manuals. However, even if the main transmission 200 is not in the neutral position, the shift range is still allowed to be changed.

First, when the low range is selected using the range changing lever, for example, in the neutral range state shown in FIG 3, for example, the operating force of the range changing lever is transmitted to the fork 64 via the selector shaft 67 such that the fork 64 is displaced in the direction of arrow X in FIG 3 (i.e., to the right in the drawing). As the coupling sleeve 63 slides as a result, the external teeth 63a of the coupling sleeve 63 are brought into mesh with the internal teeth 61 a of the low range piece 61.

Accordingly, a low range power transmitting path in which the rotation input from the input shaft 1 is transmitted from the carrier CA of the auxiliary transmission mechanism 4 to the coupling sleeve 63 to the hub 69 to the first output shaft 2 and then to the second output shaft 3 is established, such that the auxiliary transmission 400 is in the low range.

On the other hand, when the high range is selected using the range changing lever, for example, in the neutral range state shown in FIG. 3, for example, the operating force of the range changing lever is transmitted to the fork 64 via the selector shaft 67 such that the fork 64 is displaced in the direction of arrow Y in FIG. 3 (i.e., to the left in the drawing). As the coupling sleeve 63 slides as a result, the internal teeth 63b of the coupling sleeve 63 are smoothly brought into mesh with the external teeth 62a of the high range piece 62.

Incidentally, in this meshing process, as the coupling sleeve 63 slides, the synchro key 66 presses the synchronizer ring 65 against the tapered surface of the high range piece 62. The resultant frictional torque that is generated between these sliding contact surfaces brings the coupling sleeve 63 into synchronized rotation with the high range piece 62 so the internal teeth 63b of the coupling sleeve 63 can be brought smoothly into mesh with the external teeth 62a of the high range piece 62.

Accordingly, a high range power transmitting path in which the rotation input from the input shaft I is transmitted from the carrier CA of the auxiliary transmission mechanism 4 to the coupling sleeve 63 to the hub 69 to the first output shaft 2 and then to the second output shaft 3 is established, such that the auxiliary transmission 400 is the high range.

Next, a gear shift indicator (GSI) provided for indicating the optimum gear to the driver will be described.

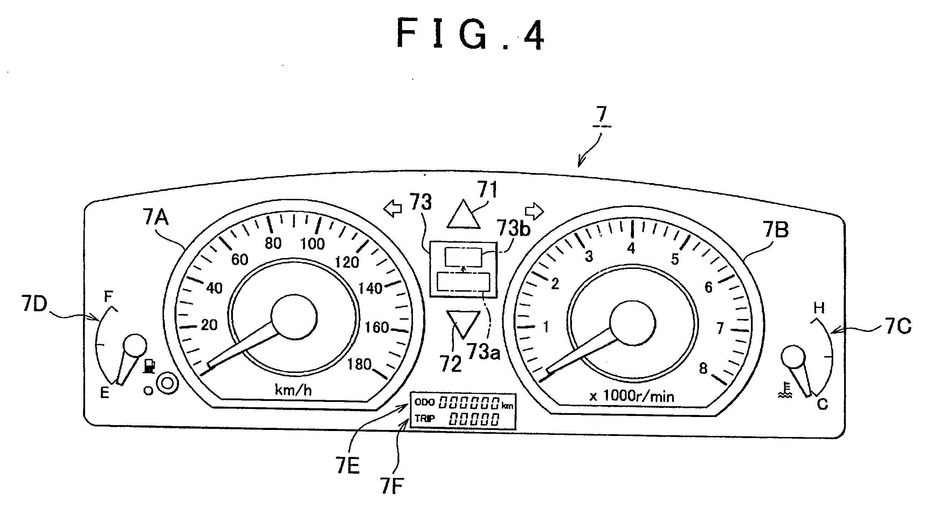

As shown in FIG. 4, a combination meter 7 arranged on a dashboard in front of the driver in the cabin of the vehicle according to this example embodiment includes a speedometer 7A, a tachometer 7B, a water temperature gauge 7C, a fuel gauge 7D, an odometer 7E, a trip meter 7F and the like, as well as a variety of warning indicator lamps (not shown) and the like.

The vehicle according to this example embodiment is provided with a gear shift indicator (i.e., a driving advice system) that indicates a gear selection of the main transmission 200 suitable for improving fuel efficiency and the like according to the running state. This gear shift indicator will now be described.

First, the combination meter 7 has, as display portions for instructing the driver to shift, an upshift lamp 71 that illuminates when the gear of the main transmission 200 needs to be upshifted, a downshift lamp 72 which illuminates when the gear of the main transmission 200 needs to be downshifted, and a liquid crystal or seven-segment display 73 that displays various numerals and characters and the like.

The lamps 71 and 72 are formed of LEDs, for example, and are illuminated as necessary. Alternatively, however, they may also be made to flash or blink. Also, two or more types of luminous bodies may be embedded in the lamps 71 and 72 to enable them to emit light of a plurality of colors, with each emission color having a different meaning. Moreover, instead of these lamps 71 and 72, voice or sound or the like may also be used to prompt the driver to shift.

Also, the display 73 includes, for example, a current gear display portion 73a which displays, using numbers or characters, the current gear of the main transmission 200 (hereinafter simply referred to as the "current gear"), and a target gear display portion 73b which displays, also using numbers or characters, the target gear of the main transmission 200 (hereinafter simply referred to as the "target gear"). For example, the display of the target gear on the target gear display portion 73b may be made to blink, and the display of the current gear in the current gear display portion 73a may be made not to blink.

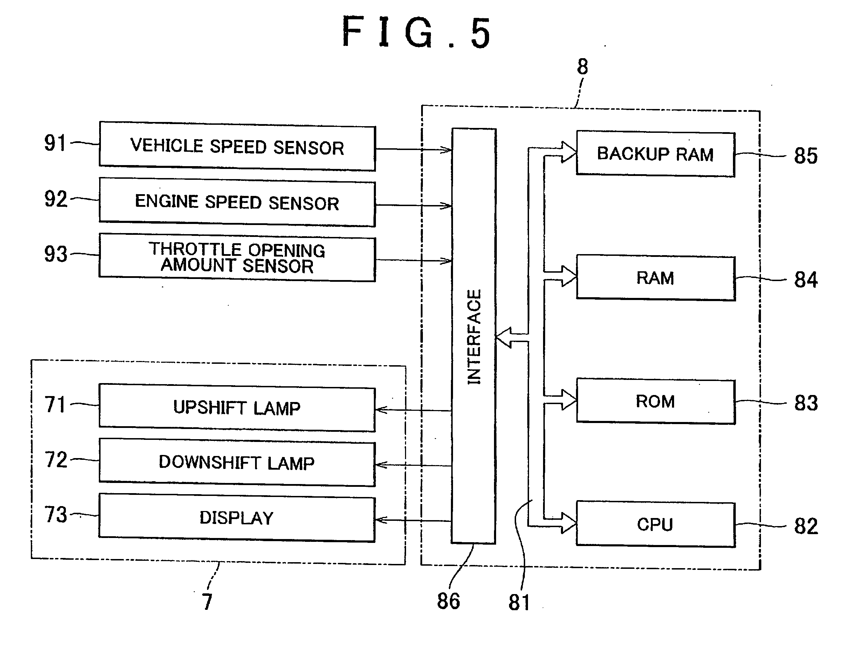

A control apparatus 8 for controlling the engine 100 and the gear shift indicator is formed of an ECU (Electronic Control Unit) that is typically well known and includes a CPU 82, ROM 83, RAM 84, backup RAM 85, and an interface 86, and the like, all of which are connected to one another by a bidirectional bus 81, as shown in FIG. 5.

Incidentally, the CPU 82 ascertains the running state of the vehicle based on signals that are output from various sensors (such as a vehicle speed sensor 91, an engine speed sensor 92, and an throttle opening amount sensor 93 and the like) and received via the interface 86, and controls the quantity of fuel (i.e., the fuel injection quantity) injected by fuel injectors (i.e., fuel injection valves), the opening and closing timing of intake and exhaust valves, and the ignition timing of spark plugs, and the like as necessary.

Also, various programs are stored in the ROM 83. These programs are used to execute not only control related to the basic operation of the vehicle, but also to at least execute shift instructing control for indicating a target gear selection of the main transmission 200 suitable for improving fuel efficiency and the like according to the running state of the vehicle, and the like. The specific details of this shift instructing control will be described later.

The RAM 84 is memory for temporarily storing calculation results from the CPU 82 and data and the like input from the various sensors. The backup RAM 85 is nonvolatile memory for storing various data that needs to be saved.

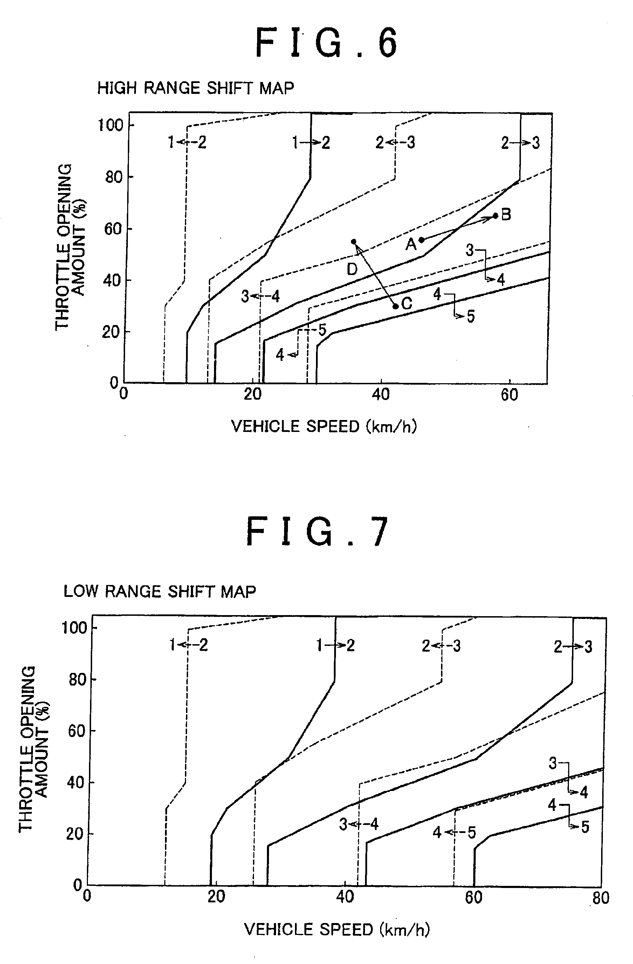

Also, control maps used in the shift instructing control is also stored in the ROM 83. These control maps are shift maps (see FIGS. 6 and 7) having shift lines (gear shifting lines) for obtaining the optimum gear for the vehicle speed and throttle opening amount. That is, the optimum gear for the running state of the vehicle is obtained according to these shift maps, and if the gear (i.e., the current gear) set by the driver differs from the obtained gear (i.e., the target gear), a shift indication is made by the target gear display portion 73b of the display 73 and the lamps 71 and 72.

In this way, the display 73, the upshift lamp 71, and the downshift lamp 72, as the display portions for instructing the driver to shift, together with the control apparatus 8 make up the gear shift indicator.

Now the shift maps will be described. The vehicle according to this example embodiment is provided with the auxiliary transmission 400. Therefore, the vehicle includes, as the shift maps, a high range shift map that is used when the auxiliary transmission 400 is in the high range (Hi), and a low range shift map that is used when the auxiliary transmission 400 is in the low range (Lo). FIG 6 shows the high range shift map and FIG. 7 shows the low range shift map.

As shown in FIGS. 6 and 7, the shift maps each have a plurality of shift lines. In FIGS. 6 and 7, the shift lines used during an upshift into a higher gear are indicated by the solid lines and the shift lines used during a downshift into a lower gear are indicated by the broken lines. Also, the direction of the upshift and downshift is indicated by numbers and an arrow in the drawings.

In these shift maps, the shift lines used during an upshift shift into a higher gear are such that when the throttle opening amount is small, the gear increases even if the vehicle speed is relatively low. Also, when the throttle opening amount is large, a shift will not be performed until the vehicle speed is relatively high. Further, the shift maps are set such that at the same vehicle speed, the gear is lower in the low range shift map (FIG 7) than it is in the high range shift map (FIG 6). That is, the low range shift map enables more driving force to be obtained than the high range shift map does at the same throttle opening amount and the same vehicle speed.

More specifically, for example, with the high range shift map, the shift lines are set such that when the throttle opening amount is maintained at 20% after the vehicle takes off from a standstill, there will be a demand to shift from 1st gear to 2nd gear when the vehicle speed reaches approximately 10 km/h. Then when the vehicle speed reaches approximately 18 km/h, there will be a demand to shift from 2nd gear to 3rd gear, and when the vehicle speed reaches approximately 25 km/h, there will be a demand to shift from 3rd gear into 4th gear. This is because it can be determined by the small throttle opening amount that the driver is not requiring sudden acceleration so in this case fuel efficiency is improved by using a higher gear. Therefore, in the region on the shift map where the throttle opening amount is small, the intervals between shift lines are narrower.

On the other hand, in this high range shift map, when the throttle opening amount is large, the gear will not be shifted until the vehicle speed becomes relatively high. For example, the shift lines are set such that when the throttle opening amount is maintained at 80% after the vehicle takes off from a standstill, there will not be a demand to shift from 1st gear to 2nd gear until the vehicle speed reaches approximately 28 km/h. The next demand to shift, i.e., the demand to shift from 2nd gear to 3rd gear, will not be until the vehicle reaches approximately 60 km/h. This is because it can be determined by the large throttle opening amount that the driver requires sudden acceleration, and this requirement can be met by maintaining a lower gear. Therefore, in the region on the shift map where the throttle opening amount is large, the intervals between shift lines are wider.

Similarly, with the shift lines used during a downshift as well, the intervals between shift lines are narrower in the region where the throttle opening amount is smaller, and wider where the throttle opening amount is larger.

Similarly, in the low range shift map, the shift lines are set such that when the throttle opening amount is maintained at 20% after the vehicle takes off from a standstill, for example, there will be a demand to shift from 1st gear to 2nd gear when the vehicle speed reaches approximately 20 km/h. Then when the vehicle speed reaches approximately 32 km/h, there will be a demand to shift from 2nd gear to 3rd gear, and when the vehicle speed reaches approximately 45 km/h, there will be a demand to shift from 3rd gear into 4th gear.

On the other hand, in this low range shift map as well, when the throttle opening amount is large, the gear will not be shifted until the vehicle speed becomes relatively high. For example, the shift lines are set such that when the throttle opening amount is maintained at 80% after the vehicle takes off from a standstill, there will not be a demand to shift from 1 st gear to 2nd gear until the vehicle speed reaches approximately 38 km/h. The next demand to shift, i.e., the demand to shift from 2nd gear to 3rd gear, will not be until the vehicle reaches approximately 75 km/h. This is because it can be determined by the large throttle opening amount that the driver requires sudden acceleration, and this requirement can be met by maintaining a lower gear.

(Gear estimating maps) In order for the gear shift indicator described above to be able to give a shift instruction, the current gear must be compared with the optimum gear (i.e., the target gear) obtained from the shift map. That is, an instruction to upshift (i.e., an upshift indication) is given when the current gear is lower than the target gear, and an instruction to downshift (i.e., a downshift indication) is given when the current gear is higher than the target gear.

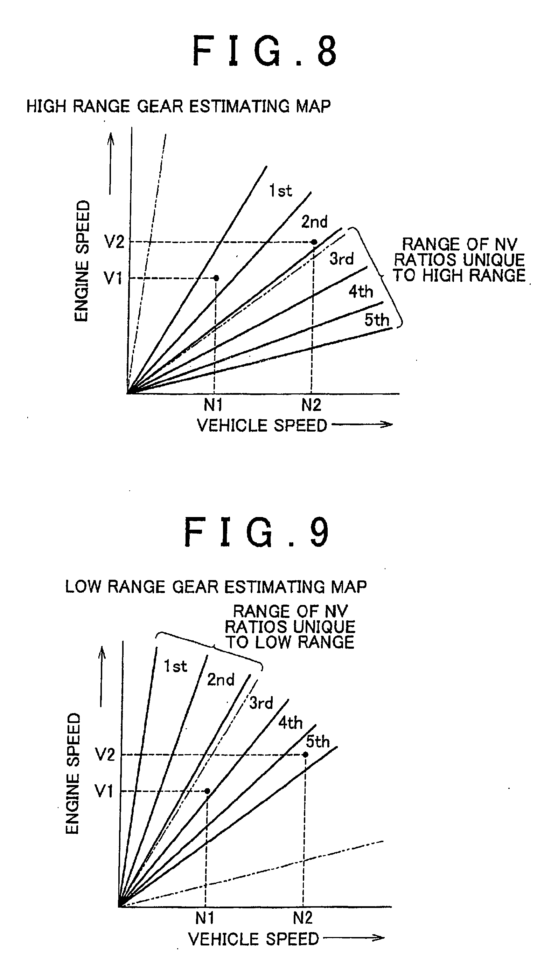

Therefore, gear estimating maps are provided to identify the current gear. Because the vehicle in this example embodiment is provided with the auxiliary transmission 400, two gear estimating maps are provided, i.e., a high range gear estimating map used when the auxiliary transmission 400 is in the high range (Hi), and a low range gear estimating map used when the auxiliary transmission 400 is in the low range (Lo). The solid lines in FIG 8 show the high range gear estimating map, and the solid lines in FIG 9 show the low range gear estimating map. These maps are stored in the ROM 83.

These gear estimating maps are used to estimate the current gear, which is done by applying information regarding the engine speed detected by the engine speed sensor and the information regarding the vehicle speed detected by the vehicle speed sensor 91 to the gear estimating maps. The operation of selecting which of the gear estimating maps is to be used to actually estimate the current gear will be described later.

The regions of the gears (1st to 5th) in the low range gear estimating map (FIG. 9), (i.e., the low range side NV ratio region is the range of NV ratios able to be established within the range of 1st to 5th) are farther toward the lower vehicle speed side than the regions of the gears (1st to 5th) in the high range gear estimating map (FIG. 8) (i.e., the high range side NV ratio region is the range ofNV ratios able to be established within the range of 1st to 5th). This is because when the auxiliary transmission 400 is in the low range, the deceleration by the auxiliary transmission 400 is greater so even if the engine speed is higher, the vehicle speed will be lower because of the deceleration by the auxiliary transmission 400.

More specifically, when the engine speed is N1, the vehicle speed is V1, and the auxiliary transmission 400 is in the high range, it is estimated that the main transmission 200 is in 1st (i.e., first gear), as shown in FIG 8. On the other hand, when the engine speed is N1, the vehicle speed is V1, and the auxiliary transmission 400 is in the low range, it is estimated that the main transmission 200 is in 3rd (i.e., third gear), as shown in FIG 9. Also, when the engine speed is N2, the vehicle speed is V2, and the auxiliary transmission is in the high range, it is estimated that the main transmission 200 is in 2nd (i.e., 2nd gear), as shown in FIG. 8. On the other hand, when the engine speed is N2, the vehicle speed is V2, and the auxiliary transmission is in the low range, it is estimated that the main transmission 200 is in 5th (i.e., 5th gear), as shown in FIG 9.

In this way, the value of the vehicle speed with respect to the engine speed is different when the auxiliary transmission 400 is in the high range than it is when the auxiliary transmission 400 is in the low range. Accordingly, even at the same engine speed and the same vehicle speed, the estimated gear of the main transmission 200 is different when the auxiliary transmission 400 is in the high range than it is when the auxiliary transmission 400 is in the low range.

Incidentally, in the description above, the current gear is estimated by applying engine speed information and vehicle speed information to the gear estimating maps. Alternatively, however, the current gear may also be obtained according to an operational expression that uses the engine speed and the vehicle speed.

Also, the rotation speed of an input shaft of the main transmission 200 may be used instead of the engine speed (i.e., the rotation speed of the crankshaft). Also, when the control apparatus 8 controls the engine speed to a target speed, that target speed signal may be used. Also, instead of the vehicle speed information detected by the vehicle speed sensor 91, information regarding the rotation speed of the first driveshaft 601 (or the second driveshaft 701) may be obtained, or wheel speed information may be obtained from an ABS (Antilock Brake System) controller.

Before describing the operation which is a characteristic of this example embodiment, the basic operation of shift indication of the gear shift indicator will be described. The control apparatus 8 identifies the current gear estimated by applying the engine speed information and the vehicle speed information to the gear estimating map (either the high range gear estimating map or the low range gear estimating map), and displays the number of the corresponding gear on the current gear display portion 73a of the display 73.

Then as shift instructing control, the control apparatus 8 ascertains the running state of the vehicle based on the signals output from the vehicle speed sensor 91 and the throttle opening amount sensor 93, reads the gear (i.e., the optimum gear) for running which is preferable for improving fuel efficiency and the like from the shift map (i.e., either the high range shift map or the low range shift map, and determines whether a shift is necessary.

If a shift is not necessary, i.e., if it is preferable to maintain the current state (that is, when the current gear is appropriate), both the upshift lamp 71 and the downshift lamp 72 are turned off and nothing is displayed in the target gear display portion 73b.

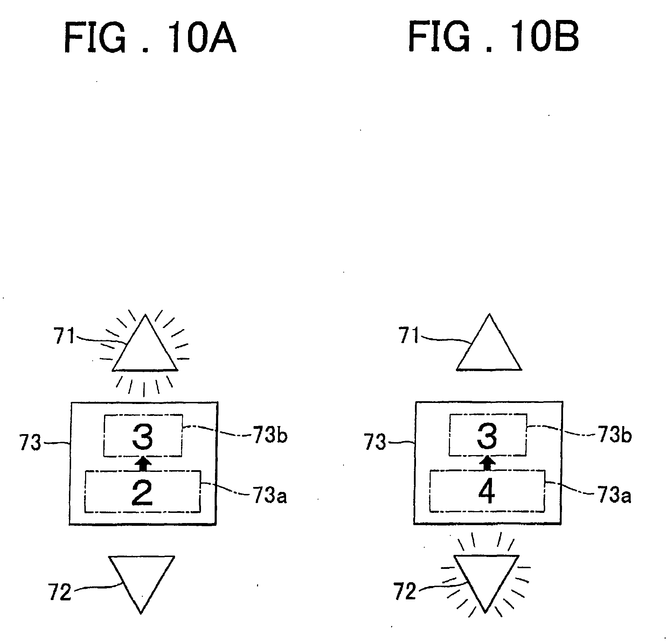

Also, if it is preferable to shift gears and an upshift is required (i.e., when a shift instructing condition to upshift is satisfied), the upshift lamp 71 is illuminated and the target gear is displayed in the target gear display portion 73b (i.e., an instruction to shift into the optimum gear is given by the shift instructing means), as shown in FIG. 10A. In FIG 10A, the current gear is 2nd gear and the target gear is 3rd gear. This display would appear when the operating state of the vehicle changes from point A to point B in FIG. 6 while the current gear of the main transmission 200 is 2nd gear, for example.

On the other hand, if it is preferable to shift gears and a downshift is required (i.e., when a shift instructing condition to downshift is satisfied), the downshift lamp 72 is illuminated and the target gear is displayed in the target gear display portion 73b (i.e., an instruction to shift into the optimum gear is given by the shift instructing means), as shown in FIG 10B. In FIG. 10B, the current gear is 4th gear and the target gear is 3rd gear. This display would appear when the operating state of the vehicle changes from point C to point D in FIG 6 while the current gear of the main transmission 200 is 4th gear, for example.

When the driver shifts into the appropriate gear according to the indication (i.e., instruction), that instruction is cancelled (i.e., the lamp 71 or 72 is turned off and the display of the target gear display portion 73b is no longer displayed). The lamp 71 or 72 may continue to be illuminated and the target gear display portion 73b may continue to display the target gear until the driver shifts into the appropriate gear, or the lamp 71 or 72 may be turned off and the display cancelled if the driver does not shift before a predetermined period of time has passed.

In a vehicle provided with the auxiliary transmission 400 described above, the value of the vehicle speed with respect to the engine speed is different when the auxiliary transmission 400 is in the high range than it is when the auxiliary transmission 400 is in the low range, as described above. Therefore, it is difficult to easily determine the current gear of the main transmission 200 from the NV ratio which is obtained from the engine speed and the vehicle speed.

This example embodiment makes it possible to easily determine the current gear of the main transmission 200 from the NV ratio even in a vehicle provided with the auxiliary transmission 400 such as that described above. A more detailed description is given below. As shown in the gear estimating maps in FIGS. 8 and 9, the regions of the gears (1st to 5th) (i.e., the range of the NV ratios that are possible within the range of 1st to 5th) are different in the high range gear estimating map than they are in the low range gear estimating map.

More specifically, in the high range gear estimating map shown in FIG 8, the range of NV ratios that are possible in the low range gear estimating map are shown overlapping the region in between the chain double-dashed lines. The region which does not overlap the region in between the chain double-dashed lines (i.e., the 4th gear region, the 5th gear region, and the area on the low engine speed side of the 3rd gear region) is the range of NV ratios that are possible only when the auxiliary transmission 400 is in the high range. Hereinafter, this range will be referred to as the "range of NV ratios unique to the high range."

Similarly, in the low range gear estimating map shown in FIG 9, the range of NV ratios that are possible in the high range gear estimating map are shown overlapping the region in between the chain double-dashed lines. The region which does not overlap the region in between the chain double-dashed lines is the range of NV ratios that are possible only when the auxiliary transmission 400 is in the low range. Hereinafter, this range will be referred to as the "range of NV ratios unique to the low range."

Thus, in this example embodiment, it is determined that the current range of the auxiliary transmission 400 is the low range when the actual NV ratio (i.e., the ratio of the current engine speed to current vehicle speed) is within the range of NV ratios that are possible only when the auxiliary transmission 400 is in the low range (i.e., within the range of NV ratios unique to the low range).

More specifically, the range ofNV ratios unique to the low range includes the entire 1st gear region and the entire 2nd gear region. These are the gears that are selected when the vehicle takes off from a standstill, in particular. Therefore, in this example embodiment, the NV ratio when the vehicle takes off from a standstill is identified, and it is determined that the auxiliary transmission 400 is in the low range when this NV ratio at take-off (i.e., the ratio of the engine speed to the vehicle speed right after take-off) is within the range of NV ratios unique to the low range (mainly the 1st gear region and the 2nd gear region). On the other hand, it is determined that the auxiliary transmission 400 is in the high range when this NV ratio at take-off is outside the range of NV ratios unique to the low range. Here, the range of NV ratios that are possible only when the auxiliary transmission 400 is in the high range may be referred to as the range of NV ratios unique to the high range, and it may be determined that the auxiliary transmission 400 is in the high range when the NV ratio while the vehicle is running is within this range of NV ratios unique to the high range, and it may be determined that the auxiliary transmission 400 is in the low range when the NV ratio while the vehicle is running is within this range of NV ratios unique to the low range. Thus, when the range of the auxiliary transmission 400 has been determined in this way, the range-gear estimating map corresponding to that range is selected and the current gear of the main transmission 200 is determined and used in the shift instructing control operation by the gear shift indicator described above.

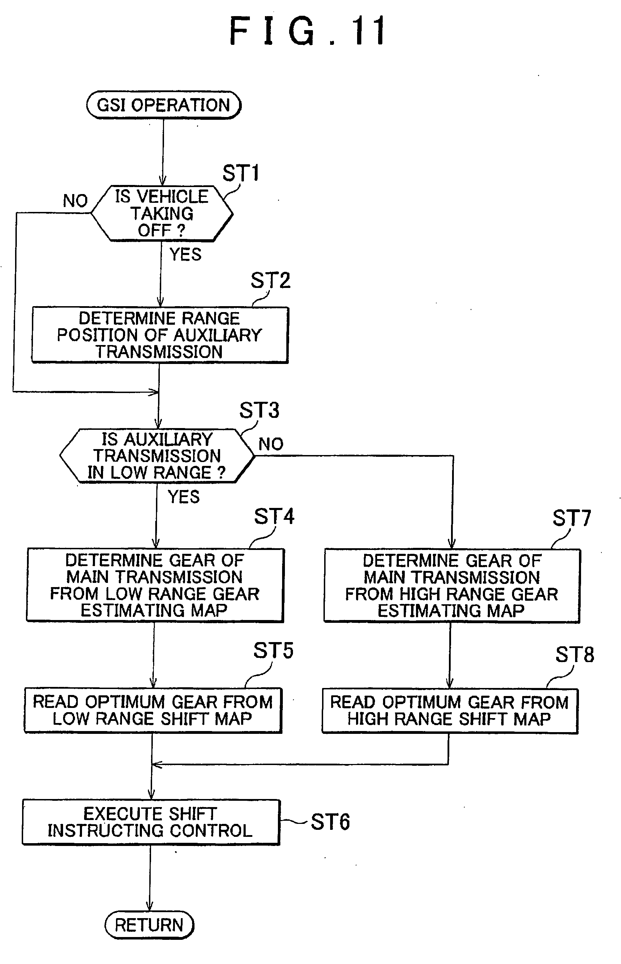

Hereinafter, the routine of this operation will be described with reference to the flowchart shown in FIG. 11. The routine shown in FIG 11 is executed at take-off, but a flowchart that is applied to when the vehicle is running may also be prepared based on the same concept. The routine shown in FIG. 11 is executed at predetermined intervals of time, such as every several milliseconds, after the engine is started.

First, in step ST1 it is determined whether the vehicle is taking off from a standstill. This determination is made based on the vehicle speed information detected by the vehicle speed sensor 91 (i.e., based on whether the vehicle speed has changed from 0 to a positive value).

If the vehicle is taking off from a standstill such that the determination in step ST1 is Yes, then the process proceeds on to step ST2 where the range position of the auxiliary transmission 400 is determined. In this range position determining operation, as described above, it is determined that the current range position of the auxiliary transmission 400 is the low range if the NV ratio at take-off (i.e., immediately after take-off) is within the range of NV ratios that are possible only when the auxiliary transmission 400 is in the low range (i.e., within the range of NV ratios unique to the low range). Also, it is determined that the auxiliary transmission 400 is in the high range if the NV ratio at take-off (i.e., immediately after take-off) is outside the range of NV ratios unique to the low range.

After the range position of the auxiliary transmission 400 has been determined in this way, it is then determined in step ST3 whether the determined range position of the auxiliary transmission 400 is the low range. If the range position of the auxiliary transmission 400 determined in step ST2 is the low range such that the determination in step ST3 is Yes, then the process proceeds on to step ST4 where the low range gear estimating map is selected and the current gear of the main transmission 200 is determined using this low range gear estimating map according to the running state thereafter. That is, the current gear that is estimated by applying the current engine speed information and the vehicle speed information to the low range gear estimating map is identified. Also, in step ST5, the low range shift map is selected and the optimum gear is read using this low range shift map. Then in step ST6, shift instructing control is performed by determining whether a shift is necessary. That is, if the current gear is appropriate such that there is no need to shift, i.e., if it is preferable to maintain the current gear, then both the upshift lamp 71 and the downshift lamp 72 are turned off and nothing is displayed on the target gear display portion 73b. If, on the other hand, an upshift is required when it is preferable to shift gears, the upshift lamp 71 is illuminated and the target gear is displayed on the target gear display portion 73b. Conversely, if a downshift is required, the downshift lamp 72 is illuminated and the target gear is displayed on the target gear display portion 73b.

If, on the other hand, the range position of the auxiliary transmission 400 determined in step ST2 is the high range such that the determination in step ST3 is No, then the process proceeds on to step ST7 where the high range gear estimating map is selected and the current gear of the main transmission 200 is determined using this high range gear estimating map according to the running state thereafter. That is, the current gear that is estimated by applying the current engine speed information and the vehicle speed information to the high range gear estimating map is identified. Also, in step ST8, the high range shift map is selected and the optimum gear is read using this high range shift map. Then in step ST6, shift instructing control is performed by determining whether a shift is necessary. That is, just as in the case described above, if the current gear is appropriate such that there is no need to shift, i.e., if it is preferable to maintain the current gear, then both the upshift lamp 71 and the downshift lamp 72 are turned off and nothing is displayed on the target gear display portion 73b. If, on the other hand, an upshift is required when it is preferable to shift gears, the upshift lamp 71 is illuminated and the target gear is displayed on the target gear display portion 73b. Conversely, if a downshift is required, the downshift lamp 72 is illuminated and the target gear is displayed on the target gear display portion 73b.

Also, if the vehicle is not taking off from a standstill such that the determination in step ST1 is No, the process proceeds to step ST3. That is, the determination information regarding the range position of the auxiliary transmission 400 determined in step ST2 the last time the vehicle took off is used and then steps ST3 to ST8 described above are executed. That is, the shift instructing control based on the current range position of the auxiliary transmission 400 is executed until the range position of the auxiliary transmission 400 is determined the next time the vehicle takes off from a standstill. This is because the range changing operation of the auxiliary transmission 400 is normally executed after the vehicle has stopped. That is, when executing the range changing operation of this auxiliary transmission 400 while the vehicle is stopped, the range position of the auxiliary transmission 400 will not change unless the vehicle is stopped so the range position of the auxiliary transmission 400 need only be determined when the vehicle takes off from a standstill.

As described above, in this example embodiment, when the actual NV ratio is within the range of NV ratios of only the low range (i.e., within the range of NV ratios unique to the low range), from among the range of NV ratios able to be established for each range position of the auxiliary transmission 400 when the vehicle takes off from a standstill, the range position of the auxiliary transmission 400 is determined to be the low range, and with any other NV ratio, the range position of the auxiliary transmission 400 is determined to be the high range. Therefore, it is possible to accurately identify the shift position of the auxiliary transmission 400 without requiring a switch or the like for determining the range of the auxiliary transmission 400. As a result, it is possible to determine the shift position of the auxiliary transmission without increasing manufacturing costs, complicating the structure, or requiring the development of logic for a fail-safe in case the switch or the like fails. Also, because the shift position of the auxiliary transmission 400 is able to be determined, the gear estimating map that is selected can be switched appropriately so the gear of the main transmission 200 can also be accurately determined. As a result, it is possible to accurately determine whether to instruct the driver to shift based on a comparison of the gear of the main transmission 200 and the optimum gear. Accordingly, a highly reliable shift instruction can be given in the vehicle provided with the auxiliary transmission 400.

Next, a second example embodiment of the invention will be described. In this example embodiment, the shift instructing control operation differs from that in the first example embodiment described above. The other structure and operation are the same as they are in the first example embodiment so only the differences with respect to the first example embodiment will be described here.

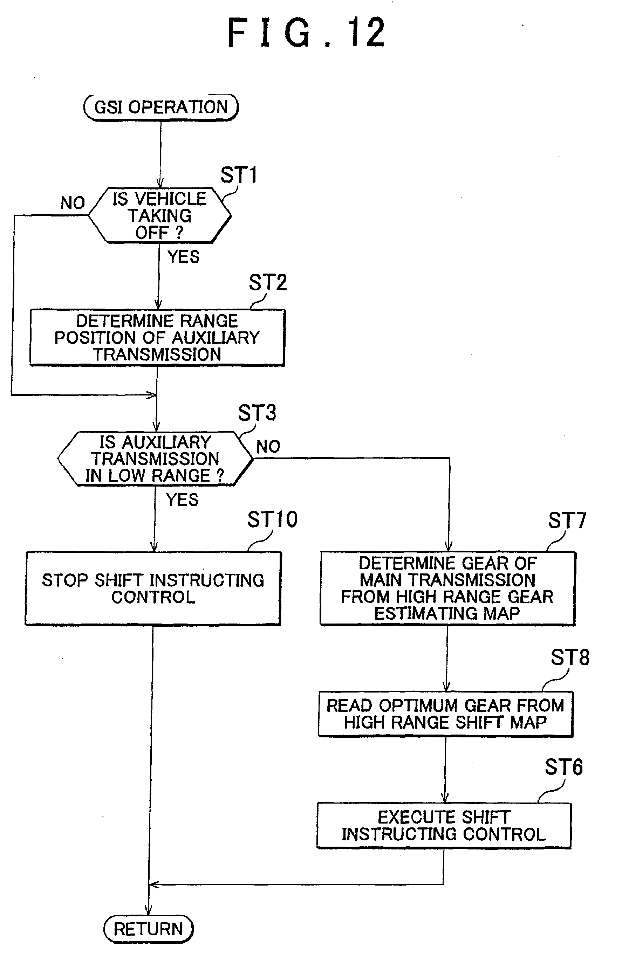

FIG. 12 is a flowchart illustrating a routine of the shift instructing control operation of this second example embodiment. The operations in steps ST1 to ST3 and steps ST6 to ST8 are the same as the operations indicated by the same step numbers in the flowchart in FIG. 11 of the first example embodiment described above so descriptions of these steps will be omitted here.

The characteristic of this example embodiment is the operation when the range position of the auxiliary transmission 400 determined in step ST2 is the low range and the determination in step ST3 is Yes.

When the determination in step ST3 is Yes, the process proceeds on to step ST10 where the shift instructing control operation stops. That is, the upshift lamp 71 and the downshift lamp 72 are both turned off and nothing is displayed on the target gear display portion 73b (i.e., this is an operation to stop the shift instruction by shift instruction stopping means).

Here, if an instruction to upshift or the like to improve fuel efficiency is given when the range position of the auxiliary transmission 400 is the low range and the driver wants more driving force to improve rough-road running performance as opposed to better fuel efficiency, that instruction does not coincide with the intentions of the driver and may thus be annoying to the driver. Therefore, when the range position of the auxiliary transmission 400 is the low range, the shift instructing control operation may be stopped.

(Other example embodiments) The example embodiments described above illustrate cases in which the invention is applied to a vehicle in which the main transmission 200 is a manual transmission. However, the invention is not limited to this. For example, the invention may also be applied to a vehicle provided with an automatic transmission having a manual shift function. This automatic transmission with a manual shift function is generally common. One example is a so-called sequential-shift transmission that upshifts and downshifts in response to a member being pulled forward and pushed backward.

Also, in the example embodiments described above, the lamps 71 and 72 and the display 73 are provided in the combination meter 7 as display portions for instructing the driver to shift. However, the locations where these are provided are not particularly limited. For example, instead of being located in the combination meter 7, the lamps 71 and 72 and the display 73 may be located near the combination meter 7, for example, or displayed using a generally well-known navigation system or a head up display system that projects information on the front windshield. Also, the current state (i.e., Hi or Lo) of the auxiliary transmission 400 may be displayed on the display 73 in the combination meter 7.

Also, in the example embodiments described above, the invention is applied to a 5-speed manual transmission, but the invention is not limited to this. For example, the invention may also be applied to a 4-speed manual transmission or a manual transmission with fewer than four speeds, or to a 6-speed manual transmission or a manual transmission with more than six speeds. Also, the engine 100 which is used in combination with the main transmission 200 is not limited to a gasoline engine. That is, it may also be a diesel engine. Further, in the example embodiments described above, the invention is applied to a four-wheel-drive vehicle in which the engine 100 in longitudinal mounted, i.e., which has a FR vehicle base. However, the invention may also be applied to a four-wheel-drive vehicle in which the engine is transverse mounted, i.e., which has an FF vehicle base.

Moreover, in the example embodiments described above, the NV ratio when the vehicle takes off from a standstill is identified and a determination is made as to whether the auxiliary transmission 400 is in the low range or the high range based on whether the NV ratio during startup is within the range of NV ratios unique to the low range. However, the invention is not limited to this. That is, according to the structure of the example embodiments described above, when the vehicle is running at a time other than at take-off and the main transmission 200 is in 1st gear or 2nd gear, it also can be determined that the auxiliary transmission 400 is in the low range if that NV ratio during running is within the range of NV ratios unique to the low range.

Further, the NV ratios in the range of NV ratios unique to the high range are NV ratios that can be obtained only when the auxiliary transmission 400 is in the high range. Therefore, while the vehicle is running it can also be determined that the auxiliary transmission 400 is in the high range if an NV ratio within the range of NV ratios unique to the high range is able to be obtained.

In addition, in the example embodiments described above, the shift position determining apparatus of the invention is used to operate the gear shift indicator. However, the shift position determining apparatus of the invention is not limited to being used for this. That is, the shift position of the auxiliary transmission 400 may also be determined for other purposes.

## Claims

1. A shift position determining apparatus that determines a shift position of an auxiliary transmission (400) in transmission unit provided with the auxiliary transmission (400) and a main transmission (200), which is connected to an output shaft of an internal combustion engine (100) and which can be manually shifted by a driver of a vehicle, **characterized by** comprising:
auxiliary shift position determining means for determining the shift position of the auxiliary transmission (400) based on the speed of the internal combustion engine (100) and the running speed of the vehicle when the vehicle is taking off from a standstill or running.

2. The shift position determining apparatus according to claim 1, **characterized in that** when an NV ratio, which is a ratio of the speed of the internal combustion engine (100) while the vehicle is running and the running speed of the vehicle, is an NV ratio that only exists within a range of NV ratios of a particular shift position, from among a range of NV ratios set in a plurality of shift positions that can be established by the auxiliary transmission (400), the auxiliary shift position determining means determines that the auxiliary transmission (400) is **in that** particular shift position.

3. The shift position determining apparatus according to claim 1, **characterized in that** two shift positions having different gear ratios can be set in the auxiliary transmission (400), one shift position corresponding to a high range and the other shift position corresponding to a low range, and when an NV ratio, which is a ratio of the speed of the internal combustion engine (100) while the vehicle is running and the running speed of the vehicle, is an NV ratio that only exists within a range of NV ratios of the low range, from among the range of NV ratios of the low range and a range of NV ratios of the high range that can be established by the auxiliary transmission (400), it is determined that the auxiliary transmission (400) is in the low range.

4. The shift position determining apparatus according to claim 3, **characterized in that** the auxiliary shift position determining means determines that the auxiliary transmission (400) is in the high range when the NV ratio is in a range other than the range of NV ratios of the low range.

5. The shift position determining apparatus according to claim 1, **characterized in that** two shift positions having different gear ratios can be set in the auxiliary transmission (400), one shift position corresponding to a high range and the other shift position corresponding to a low range, and when an NV ratio, which is a ratio of the speed of the internal combustion engine (100) while the vehicle is running and the running speed of the vehicle, is an NV ratio that only exists within a range of NV ratios of the high range, from among a range of NV ratios of the low range and the range of NV ratios of the high range that can be established by the auxiliary transmission (400), it is determined that the auxiliary transmission (400) is in the high range.

6. The shift position determining apparatus according to claim 5, **characterized in that** the auxiliary shift position determining means determines that the auxiliary transmission (400) is in the low range when the NV ratio is in a range other than the range of NV ratios of the high range.

7. A gear shift indicator which is used in a vehicle having a manual transmission as a main transmission (200) that can be manually shifted, and which instructs a driver to shift the gear of the main transmission (200) to an optimum gear when a shift instructing condition is satisfied, the shift instructing condition being that the optimum gear of the main transmission (200) obtained according to a driving state of the vehicle differs from the gear of the main transmission (200) selected by the driver, **characterized by** comprising:
shift instructing means for i) receiving a signal output from the auxiliary shift position determining means in the shift position determining apparatus of the auxiliary transmission (400) according to any one of claims 1 to 6, ii) estimating the gear of the main transmission (200) currently selected by the driver, according to the shift position of the auxiliary transmission (400) determined by the auxiliary shift position determining means, and iii) instructing the driver to shift into the optimum gear when the current gear of the main transmission (200) differs from the optimum gear.

8. A gear shift indicator which is used in a vehicle having a manual transmission as a main transmission (200) that can be manually shifted, and which instructs a driver to shift the gear of the main transmission (200) to an optimum gear when a shift instructing condition is satisfied, the shift instructing condition being that the optimum gear of the main transmission (200) obtained according to a driving state of the vehicle differs from the gear of the main transmission (200) selected by the driver, **characterized by** comprising:
shift instructing means for i) receiving a signal output from the auxiliary shift position determining means in the shift position determining apparatus of the auxiliary transmission (400) according to claim 3 or 6, ii) estimating the gear of the main transmission (200) currently selected by the driver, according to the shift position of the auxiliary transmission (400) determined by the auxiliary shift position determining means, and iii) instructing the driver to shift into the optimum gear when the current gear of the main transmission (200) differs from the optimum gear; and
shift instruction stopping means for i) receiving a signal output from the auxiliary shift position determining means, and ii) stopping the shift instructing means from instructing the driver to shift when it is determined that the auxiliary transmission (400) is in the low range.
